# EUROPEAN PATENT SPECIFICATION

(11) **EP 1 169 139 B1**
(45) Date of publication and mention of the grant of the patent: **08.12.2010**
(21) Application number: 00907024.4
(22) Date of filing: 24.01.2000
(51) Int. Cl.: B05D 3/02, B05D 7/00, B32B 21/04, D21H 27/28, B44C 5/04

(54) **SYNTHETIC RESIN FILM FOR LAMINATES AND METHOD OF PRODUCING SAME**
SYNTHETISCHER HARZFILM FÜR LAMINATE UND VERFAHREN ZU DESSEN HERSTELLUNG
FILM EN RESINE SYNTHETIQUE POUR PRODUITS STRATIFIES ET PROCEDE DE FABRICATION CORRESPONDANT

(30) Priority: 22.01.1999 US 235686
(43) Date of publication of application: 09.01.2002
(73) Proprietor: Coveright Surfaces Holding GmbH, 45141 Essen (DE)
(72) Inventor: LIU, Ann, X., Cobourg, Ontario K9A 5K4 (CA); GUIVERNAU-MARGUES, Ramon, Markham, Ontario L3R 1Z1 (CA)
(74) Representative: Tilmann, Max Wilhelm
(86) International application number: PCT/US2000/001826
(87) International publication number: WO 2000/043132

(56) References cited:
- EP-A- 0 186 257
- EP-B1- 0 186 257
- GB-A- 1 591 954
- US-A- 4 322 468
- US-A- 4 741 946
- US-A- 5 456 949

## Description

This invention relates to synthetic resin film for laminates having improved scratch resistance and methods of producing the same.

### Background of the Invention

Synthetic resin film is used in the manufacture of laminates. It is used most typically as the surface material of a laminate. Synthetic resin film is generally of two types. The first is impregnated paper, also known as resin impregnated paper or saturated paper. The other is finished foils, also known as decorative foils. Impregnated paper is distinguished from finished foils in that the thermosetting resin in a resin impregnated paper is at most partially cured prior to lamination, while those in a finished foil are fully cured. This means that impregnated paper does not require an adhesive during the lamination process, while finished foils do.

Synthetic resin film is produced by manufacturing methods and processes well known in the art. In general, impregnated paper is manufactured by impregnating a substrate with a liquid composition comprising thermosetting resin, drying the resin, and, either simultaneously with and/or subsequently to drying, partially curing the resin to form impregnated paper. A common industrial method of carrying out the impregnation is to pass the substrate through one or more baths containing a liquid composition comprising thermosetting resin. The resin-laden substrate is then typically dried by exposure to a drying zone having an elevated temperature, usually between about 60 and about 90°C. Simultaneous with and/or subsequent to the drying, the resin is partially polymerized (partially cured) by exposure to heat. Temperatures required for partial curing vary depending on the resin, however, typical temperatures are between about 100°C and about 170°C. Further details of the composition and manufacture of impregnated paper may be found in, for example, European Patent Specification Publication No. 0 186 257 and UK Patent Specification 1 591 954. Methods of making finished foils are also well known in the art. These methods are substantially the same as those for making impregnated paper, the important distinction being that the resin in the finished foil is substantially completely, rather than partially, cured.

Synthetic resin film is predominately used as the surface material to produce laminates. Such films are typically used as a surface material for materials comprising wood, for non-limiting example, particle board, medium density fiber board, composite panel and other wood-based materials. Synthetic resin film is more particularly used to produce decorative laminates for applications such as woodworking, furniture, flooring and automotive industries. Decorative laminates typically employ synthetic resin film that has been produced using a substrate that is colored, printed, etc. to provide pleasing esthetic qualities. The substrate can also be transparent, for example, overlays.

Laminates are typically referred to as either "low pressure laminates" or "high pressure laminates." The synthetic resin film produced according to the current invention can be used in the manufacture of either low pressure laminates or high pressure laminates. Low pressure laminates are typically produced by hot press lamination of synthetic resin film, typically in the form of resin impregnated paper, to a "backing" or "board" such as fiber board, especially medium density fiber board, particle board, composite panel, etc. This produces a hard, crosslinked thermoset material on the surface of the board or backing. A major reason for laminating the board or backing with synthetic resin film is to provide it with an esthetically pleasing, as well as durable, surface. Accordingly, the substrate used to make synthetic resin film for both high pressure and low pressure lamination is typically colored, printed or otherwise decorated. For these applications, "resin impregnated paper" is sometimes referred to as "resin impregnated surfacing materials."

Resin-types frequently used to make synthetic resin film, especially resin impregnated paper, for both high pressure and low pressure applications are melamine resins (including, for example, melamine formaldehyde), urea resins (including, for example, urea formaldehyde), and phenolic resins (including phenol formaldehyde). When the resin used to make impregnated paper is a melamine or urea, hot pressing of the resin impregnated paper to the backing to make a low pressure laminate usually is conducted at between about 260°F (130°C) and about 430°F (220°C) and about 200 to 430 psi (14 to 30 kg/cm²).

High pressure laminates, on the other hand, are conventionally made by stacking and curing under heat and pressure a plurality of layers (at least two) of impregnated paper, fabrics and/or other core material. The stacked assembly typically comprises several layers (at least 2, but more typically 3 to 8) of impregnated paper. All of these layers, except a decorative layer, are normally, though not necessarily, resin impregnated paper having a Kraft paper substrate impregnated with phenolic (including phenol formaldehyde) or melamine resin. If a decorative layer is placed on top of the other layers it is usually impregnated paper formed from a colored, printed or otherwise decorated paper substrate impregnated with resin. An overlay, which is transparent or translucent and allows viewing of the decorative layer, may be placed over the decorative layer. The stacked assembly forming a high pressure laminate usually is cured at a temperature of between about 230°F (110°C) and about 340°F (170°C) and about 800 (56 kg/cm²) to about 1600 psi (112 kg/cm²). Further information regarding the production of laminates, especially decorative high pressure laminates, may be found in, for example, the above-mentioned European Patent Specification Publication No. 0 186 257 and UK Patent Specification 1 591 954.

It is known that some properties of synthetic resin film can be improved by the use of certain additives in the liquid thermosetting resin used to impregnate the substrate. For example, acrylic can be added to make the impregnated paper more flexible. Also, aluminum oxide (Al₂O₃) can be added to the resin to improve abrasion resistance of the resulting the impregnated paper (EP 0 186 257) US 5,456,949 disposes the use of alumina particles of a distinct particle size as an additive for a synthetic resin film. US 5,456,949 teaches also the use of a lubricating agent to impart scrape resistance. However, technoloqical solutions are still sought for the need to increase the scratch resistance of synthetic resin film.

Surprisingly, it has been found that the use of low profile additives in the thermosetting resin, in particular ceramic microspheres or micronized (powdered) polyethylene, significantly improves the scratch resistance of the resulting synthetic resin film. This improved scratch resistance can be achieved without adding additional layers or affecting the decorative appearance of the laminate.

### Summary of the invention

The current invention relates to a method of producing a synthetic resin film for laminates, said synthetic resin film comprising a substrate impregnated with a thermosetting resin composition, said method comprising
(a) impregnating the substrate with a thermosetting resin composition comprising a thermosetting resin and a low profile additive which is inert, substantially spherical and has a particle size in the range of about 5 to about 60 microns; and
(b) drying the impregnated substrate of (a).
Additionally, simultaneous with, and/or subsequent to drying, the impregnated substrate can be at least partially cured.

Preferably the low profile additive is ceramic microspheres.

The invention also relates to a method of preparing a thermosetting resin composition comprising a low profile additive and a liquid thermosetting resin.

The invention further relates to synthetic resin film comprising a substrate impregnated with a dried and at least partially cured thermosetting resin and a low profile additive which is inert, substantially spherical and has a particle size in the range of about 5 to about 60 microns.

Further the invention relates to laminates comprising a synthetic resin film of the type described above.

### Detailed description of the invention

The current invention, in one embodiment, is a method of producing synthetic resin film by impregnating a substrate with a thermosetting resin composition comprising an uncured thermosetting resin and a low profile additive, then drying the impregnated substrate. In another embodiment, after impregnation, the uncured thermosetting resin is at least partially cured, either during and/or subsequent to drying. The invention also comprises the resulting synthetic resin film. It has been found that the use of such low profile additives, as described herein, significantly and surprisingly increases the scratch resistance of the resulting synthetic resin film.

The substrate used in the process of the current invention for making impregnated paper, though usually paper, may be any type of impregnable substrate, including for non-limiting example, woven and non-woven textiles. If intended for decorative purposes, the substrate is normally printed, colored or otherwise decorated paper having a basis weight about 20 to about 250 grams, more typically about 70 to about 130 grams. Typical basis weight for finish foil is about 30 to about 90 g/m². Impregnated papers intended for the under layers of high pressure laminates most typically have Kraft paper substrates and basis weight about 30 to about 260 g/m².

In principle, any uncured thermosetting resin, or combination of thermosetting resins, can be used in a thermosetting resin composition to make synthetic resin film according to the instant invention. Currently, the resins most commonly used are melamine-formaldehyde, urea-formaldehyde, phenolformaldehyde, acrylic resins and polyester resins. The resin is typically applied to the substrate in the form of an aqueous or solvent solution having a resin concentration of about 40 to about 60 wt. %, preferably about 45 to about 55 wt. %. The substrate can be impregnated with resin by various techniques of applying resin compositions, such as baths, rollers, doctor blades, air knife, wire wrapped rod, metering roll, doctor bars, etc. The resin compositions can be applied in one or more stages with drying and/or partial curing between application stages.

The resin composition "low profile additives" are inert, substantially spherical particles having a particle size in the range of about 5 to about 60 microns, most preferably in the range of about 10 to about 50 microns Such particles are typically ceramic or thermoplastic polymers, such as polyethylene. Such particles are commonly referred to as microspheres or powders. Non-limiting examples of commercially available low profile additives are ceramic microspheres from Zeelan Industries, Inc., St. Paul, MN as Zeeospheres ceramic microspheres, and Polywax® polyethylene powder (molecular weight 400 to 3000) available from Baker Petrolite Polymers Division. Use of uncured resin compositions having such low profile additives to produce synthetic resin film surprisingly provides unexpectedly improved scratch resistance. Low profile additives should be present in an amount to provide desired scratch resistance, usually about 2.5 Newtons or higher, preferably about 3.0 Newtons or higher, most preferably about 3.5 Newtons or higher. To provide the desired scratch resistance, the low profile additive is typically present in the final synthetic resin film in an amount of at least about 0.5 g/m², preferably at least about 2 g/m², more preferably at least about 5 g/m², and most preferably at least about 6 g/m².

The invention is further disclosed and described by the following non-limiting examples. All percentages, unless otherwise indicated, are weight percent.

### Preparation and Testing of Samples Relating to Ceramic Microspheres as Low Profile Additive

Resin impregnated paper for the examples reported was prepared by the method described below.
1. An uncured thermosetting resin composition of 50 wt.% melamine formaldehyde resin was prepared according to the following formula:
   84 % aqueous composition of melamine formaldehyde resin (59 % solids content)
   0.33 % Aricel 100 (catalyst from Borden Chemicals)
   10 % water
   1.3 % Hypersal XT793 (wetting agent from Hoechst)
   4.6 % aqueous slurry of ceramic microspheres (see below)
   In examples where the uncured thermosetting resin composition comprised low profile additive the low profile additive was added by first making a slurry 67 wt.% on solids. The slurry was prepared by combining the following in a high speed mixer:
   80 kg Zeeospheres W610 ceramic microspheres
   5 kg Acumer 9300 (dispersing agent from Rohm & Haas)
   35 kg water
   The uncured thermosetting resin composition described above (without low profile additive) was then prepared in another high speed mixer. The low profile additive slurry was slowly added to form a well-mixed composition. Examples having low profile additives are indicated on Table 1. The low profile additives in the examples in Table 1 are Zeeospheres W61 0 ceramic microspheres, from Zeelan Industries, Inc., St. Paul, MN.
2. Four hundred liters of the thermosetting resin composition prepared above were placed in the first bath of a Babcock coating machine. The Babcock coating machine was loaded with a 1.53 m wide roll of decorative paper (basis weight noted for each example in Table 1) and run through at 23 m/min. The thus treated paper was air dried at 80°C.
3. A second uncured thermosetting resin composition of 55 wt.% melamine-formaldehyde resin was prepared according to the following formula:
   90 % aqueous composition of melamine-formaldehyde (59% solid content)
   0.4 % Aricel 100 (catalyst from Borden Chemicals)
   3.5 % water
   4.3 % aqueous slurry of ceramic microspheres (67 % solids)
   0.8 % Additiol VXT 3750 (release agent from Hoechst)
4. In examples where the second uncured thermosetting resin composition comprised low profile additive, the low profile additive was added to the thermosetting resin composition by the same process as that described in step 1 above. Examples having low profile additives are indicated on Table 1. The low profile additives used are described in step 1 above. In Table 1, examples "With Additive" contain ceramic microspheres in both the first and second uncured thermosetting compositions.
5. The second uncured thermosetting resin was applied with a roller to the already once-treated substrate. The treated decorative resin impregnated paper was then subjected to an oven having varying temperature zones; 150°C, 140°C, and 155°C. The speed of the sample through the oven was 22 to 24 meters per minute. The final volatiles was about 4.8 to about 5.4 % and the final resin content of the synthetic resin film is about 56 to about 60%.
6. The resulting synthetic resin films (in this case, resin impregnated paper) was then tested for scratch resistance by using a Teledyne Taber Scratch Tester (Scratch Tester). The resin impregnated paper was first laminated to a 5.5 to 6.0 mm thick piece of medium density fiber board using a Burkle press. Lamination was affected by operating the press at 45 bar and 195°C for 30 seconds. A 10 cm x 10 cm sample of the laminate was cut. A hole was drilled in the center of the sample. The sample was mounted on the Scratch Tester. The Scratch Tester uses a weighted diamond point which is drawn in a circular motion over the mounted sample, using first 5 Newtons force, then reducing the force (usually in 0.5 Newtons increments) until the diamond point scores a continuous circle in the sample. The scratch test results are reported in Table I in Newtons. It is desirable to have a scratch resistance about 2.5 or higher, preferable about 3.0 or higher, more preferable about 3.5 or higher.

**Table 1**

| Scratch Resistance Test Results: Ceramic Microspheres | | | | |
|---|---|---|---|---|
| Sample No. | Basis Weight (g/m²) | Presence of Additive (g/m²) | Scratch Resistance: With Additive (Newtons) | Scratch Resistance Without Additive (Newtons) |
| 1 | 80 | 6.8 | 4.0 | 2.5 |
| 2 | 85 | 0.71 | 2.5 | 2.0 |
| 3 | 85 | 5.0 | 3.0 | 2.0 |
| 4 | 72 | 5.9 | 3.5 | 3.0 |
| 5 | 83 | 2.73 | 4.0 | 3.5 |
| 6 | 85 | 2.14 | 3.0 | 2.5 |
| 7 | 85 | 3.01 | 3.5 | 3.0 |
| 8 | 75 | 5.2 | 3.5 | 3.0 |
| 9 | 80 | 5.7 | 4.5 | 3.5 |
| 10 | 105 | 5.6 | 3.5 | 2.0 |
| 11 | 80 | 5.9 | 3.5 | 2.0 |
| 12 | 80 | 6.5 | 4.0 | 2.5 |
| 13 | 130 | 3.7 | 4.5 | 3.0 |
| 14 | 80 | 3.3 | 3.75 | 3.0 |

As shown by the test results above, the use of low profile additives in accordance with the current invention surprisingly and unexpectedly increases the scratch resistance of resin impregnated paper.

### Preparation and Testing of Samples Relating to Polyethylene Powder as Low Profile Additive

Resin impregnated paper for the examples reported was prepared by the method described below.
1. An uncured thermosetting resin composition of 50 wt.% melamine formaldehyde resin was prepared according to the following formula:
   73.37 % aqueous composition of melamine formaldehyde resin (59 % solids)
   0.33 % Aricel 100 (catalyst from Borden Chemicals)
   10 % water
   1.3 % Hypersal XT793 (wetting agent from Hoechst)
   15 % polyethylene powder (Polywax®, Baker Petrolite Polymers Division)
   The components were mixed in a laboratory mixer. In examples where the uncured thermosetting resin composition comprised low profile additives (polyethylene powder), the low profile additive was dispersed directly into the uncured thermosetting resin composition. In the final uncured thermosetting resin composition, low profile additives were present as 15 wt. % on the weight percentage of liquid content resin. Examples having low profile additives are indicated on Table 2.
2. An 8 in. x 10 in. piece of decorative paper of basis weight as indicated in Table 2 was placed in a bath containing the resin composition of step 1 until the resin composition permeated through the paper as indicated by darkening of the paper. The thus treated paper was oven dried at 130°C for about 40 to 50 seconds.
3. The piece of decorative paper already treated in step 1 was roller coated with the resin composition prepared in step 1 to provide a second resin coat. The resulting synthetic resin film was completed by placing the treated paper in an oven for about 110 to 120 seconds at 130°C.
4. The resulting synthetic resin film (resin impregnated paper in this case) was then tested for scratch resistance by the method described above. Results are reported in Table 2.

**Table 2**

| Scratch Resistance Test Results: Polyethylene Powder | | | |
|---|---|---|---|
| Sample No. | Basis Weight (g/m²) | Scratch Resistance: With Additive (Newtons) | Scratch Resistance: Without Additive (Newtons) |
| 15 | 85 | 3.0 | 1.5 |
| 16 | 105 | 3.0 | 1.5 |
| 17 | 130 | 3.5 | 2.0 |

As shown by the test results above, the use of low profile additives in accordance with the current invention surprisingly and unexpectedly increases the scratch resistance of resin impregnated paper.

## Claims

1. A method of producing synthetic resin film for laminates, said synthetic resin film comprising a substrate impregnated with a thermosetting resin, said method comprising
(a) impregnating the substrate with a first thermosetting resin composition comprising a first uncured thermosetting resin and a low profile additive, which is inert, substantially spherical and has a particle size in the range of about 5 to about 60 microns,
(b) drying the impregnated substrate of (a),
(c) impregnating the substrate of (b) with a second thermosetting resin composition comprising a second uncured thermosetting resin and a low profile additive, which is inert, substantially spherical and has a particle size in the range of about 5 to about 60 microns,
and
(d) drying the impregnated substrate of (c).

2. The method of claim 1, further comprising at least partially curing the first uncured thermosetting resin in the impregnated substrate.

3. The method of claims 1 or 2, **characterized in that** said low profile additive comprises ceramic microspheres.

4. The method of claims 1 or 2, **characterized in that** said low profile additive comprises thermoplastic polymer powder.

5. The method of claim 4, **characterized in that** said low profile additive comprises polyethylene powder.

6. The method of any of the preceding claims, further comprising at least partially curing the second uncured thermosetting resin in the impregnated substrate.

7. The method of any of the preceding claims, **characterized in that** said first uncured thermosetting resin and said second uncured thermosetting resin are the same.

8. The method of any of the preceding claims, **characterized in that** the low profile additive is present in amounts sufficient to provide said synthetic resin film with a scratch resistance of at least about 2.5 Newtons.

9. Synthetic resin film for laminate comprising a substrate, impregnated with an at least partially cured thermosetting resin and a low profile additive, which is inert, substantially spherical and has a particle size in the range of about 5 to about 60 microns, e.g. ceramic microspheres.

10. A laminate comprising the synthetic resin film of claim 9 laminated to a base material, e.g. wood, particle board, medium density fiber board or composite panel.

11. A process of producing laminate, said process comprising assembling a plurality of layers of synthetic resin film at least one of said layers being the synthetic resin film of claim 9, and subjecting said assembly to heat and pressure sufficient to effect consolidation of said layers to produce a laminate.

12. The laminate obtainable by the process of claim 11.

13. Synthetic resin film of claim 9, **characterized in that** the low profile additives are present in amounts sufficient to provide said synthetic resin film with a scratch resistance of at least about 2.5 Newtons.

## Patentansprüche

1. Verfahren zur Herstellung eines Kunstharzfilms für Laminate, **dadurch gekennzeichnet, dass** der Kunstharzfilm ein Substrat enthält, welches mit einem hitzehärtbaren Harz imprägniert ist, welches Verfahren umfasst:
(a) Imprägnierung des Substrats mit einer ersten hitzehärtbaren Harzzusammensetzung enthaltend ein erstes ungehärtetes hitzehärtbares Harz und ein "low-profile" Additiv, welches inert und im wesentlichen sphärisch ist und eine Partikelgröße von etwa 5 bis zu etwa 60 µm aufweist,
(b) Trocknen des imprägnierten Substrats aus (a),
(c) Imprägnierung des Substrats aus (b) mit einer zweiten hitzehärtbaren Harzzusammensetzung enthaltend ein zweites ungehärtetes hitzehärtbares Harz und ein "low-profile" Additiv, welches inert und im wesentlichen sphärisch ist und eine Partikelgröße von etwa 5 bis zu etwa 60 µm aufweist,
und
(d) Trocknen des imprägnierten Substrats aus (c).

2. Verfahren gemäß Anspruch 1, weiterhin umfassend das zumindest teilweise Aushärten des ersten ungehärteten hitzehärtbaren Harzes in dem imprägnierten Substrat.

3. Verfahren nach Anspruch 1 oder 2, **dadurch gekennzeichnet, dass** das genannte "low-profile" Additiv keramische Mikrokügelchen enthält.

4. Verfahren nach Anspruch 1 oder 2, **dadurch gekennzeichnet, dass** das genannte "low-profile" Additiv thermoplastisches Polymerpulver enthält.

5. Verfahren nach Anspruch 4, **dadurch gekennzeichnet, dass** das genannte "low-profile" Additiv Polyethylenpulver enthält.

6. Verfahren nach einem der vorhergehenden Ansprüche, weiterhin umfassend das zumindest teilweise Aushärten des zweiten ungehärteten hitzehärtbaren Harzes in dem imprägnierten Substrat.

7. Verfahren nach einem der vorhergehenden Ansprüche, **dadurch gekennzeichnet, dass** das erste ungehärtete hitzehärtbare Harz und das zweite ungehärtete hitzehärtbare Harz gleich sind.

8. Verfahren nach einem der vorhergehenden Ansprüche, **dadurch gekennzeichnet, dass** das "low-profile"-Additiv In einer Menge vorliegt, die ausreicht, um dem genannten Kunstharzfilm eine Kratzbeständigkeit von mindestes etwa 2.5 Newton zu verleihen.

9. Kunstharzfilm für Laminat umfassend ein Substrat, das imprägniert ist mit einem zumindest partiell ausgehärteten hitzehärtbaren Harz und einem "low-profile" Additiv, welches inert und im wesentlichen sphärisch ist und eine Partikelgröße von etwa 5 bis zu etwa 60 µm aufweist, z.B. keramische Mikrokügelchen.

10. Ein Laminat umfassend den Kunstharzfilm gemäß Anspruch 9, laminiert auf ein Trägermaterial, wie z.B. Holz, eine Spannplatte, eine Faserplatte mittlerer Dichte oder eine Verbundplatte.

11. Verfahren zur Herstellung eines Laminats, umfassend das Zusammensetzen einer Vielzahl von Schichten aus Kunstharzfilm, wobei mindestens eine der Schichten ein Kunstharzfilm gemäß Anspruch 9 ist, und dieser Aufbau einer für die Verfestigung dieser Schichten zu einem Laminat ausreichenden Hitze und Druck ausgesetzt wird.

12. Laminat erhältlich durch das Verfahren gemäß Anspruch 11.

13. Kunstharzfilm gemäß Anspruch 9, **dadurch gekennzeichnet, dass** die "low-profile" Additive in einer Menge vorliegen, die ausreicht um dem genannten Kunstharzfilm eine Kratzbeständigkeit von mindestes etwa 2.5 Newton zu verleihen.

## Revendications

1. Procédé de fabrication d'un film de résine synthétique pour des stratifiés, ledit film de résine synthétique comprenant un substrat imprégné d'une résine thermodurcissable, ledit procédé comprenant les étapes consistant à:
(a) imprégner le substrat d'une première composition de résine thermodurcissable comprenant une première résine thermodurcissable non polymérisée et un additif à bas profile, qui est inerte, globalement sphérique et qui a une taille de particules dans la plage d'environ 5 à environ 60 micromètres,
(b) sécher le substrat imprégné du (a),
(c) imprégner le substrat du (b) d'une deuxième composition de résine thermodurcissable comprenant une deuxième résine thermodurcissable non polymérisée et un additif à bas profile, qui est inerte, globalement sphérique et qui a une taille de particules dans la plage d'environ 5 à environ 60 micromètres,
et
(d) sécher le substrat imprégné du (c).

2. Procédé selon la revendication 1, comprenant en outre au moins la polymérisation partielle de la première résine thermodurcissable non polymérisée dans le substrat imprégné.

3. Procédé selon les revendications 1 ou 2, **caractérisé en ce que** ledit additif à bas profile comprend des microsphères de céramique.

4. Procédé selon les revendications 1 ou 2, **caractérisé en ce que** ledit additif à bas profile comprend une poudre de polymère thermoplastique.

5. Procédé selon la revendication 4, **caractérisé en ce que** ledit additif à bas profile comprend une poudre de polyéthylène.

6. Procédé selon l'une quelconque des revendications précédentes, comprenant en outre au moins la polymérisation partielle de la deuxième résine thermodurcissable non polymérisée dans le substrat imprégné.

7. Procédé selon l'une quelconque des revendications précédentes, **caractérisé en ce que** ladite première résine thermodurcissable non polymérisée et ladite deuxième résine thermodurcissable non polymérisée sont identiques.

8. Procédé selon l'une quelconque des revendications précédentes, **caractérisé en ce que** ledit additif à bas profile est présent en des quantités suffisantes pour fournir audit film de résine synthétique une résistance aux rayures d'au moins environ 2,5 newtons.

9. Film de résine synthétique pour un stratifié comprenant un substrat, imprégné d'une résine thermodurcissable au moins partiellement polymérisée et un additif à bas profile, qui est inerte, globalement sphérique et qui a une taille de particules dans la plage d'environ 5 à environ 60 micromètres, par exemple des microsphères de céramique.

10. Stratifié comprenant le film de résine synthétique selon la revendication 9 stratifié sur un matériau de base, par exemple du bois, un panneau de particules, un panneau de fibres de densité moyenne ou un panneau composite.

11. Procédé de fabrication d'un stratifié, ledit procédé comprenant l'assemblage d'une pluralité de couches de film de résine synthétique, au moins une desdites couches étant constituée dudit film de résine synthétique selon la revendication 9, et la soumission dudit assemblage à de la chaleur et une pression suffisantes pour effectuer la consolidation desdites couches pour produire un stratifié.

12. Stratifié pouvant être obtenu par le procédé selon la revendication 11.

13. Film de résine synthétique selon la revendication 9, **caractérisé en ce que** les additifs à bas profile sont présents en des quantités suffisantes pour fournir audit film de résine synthétique une résistance aux rayures d'au moins environ 2,5 newtons
